# DEMANDE DE BREVET EUROPEEN

(11) **EP 3 599 118 A1**
(43) Date de publication de la demande: **29.01.2020**
(21) Numéro de dépôt: 19178137.6
(22) Date de dépôt: 04.06.2019
(51) Int. Cl.: B60J 1/08, B32B 17/10, B60Q 1/26, F21V 8/00, G02B 5/02

(54) **ENSEMBLE COMPORTANT UNE VITRE POUR FERMER UN HABITACLE DE VÉHICULE AUTOMOBILE ET UNE SOURCE LUMINEUSE PORTÉE PAR UN SUPPORT FIXÉ À LA VITRE**

(30) Priorité: 25.07.2018 FR 1856917
(71) Demandeur: RENAULT s.a.s., 92100 Boulogne-Billancourt (FR)
(72) Inventeur: BEZEAULT, Loïc, 78150 Le Chesnay (FR); MARRY, Stefan, 91530 Saint Chéron (FR); HODIESNE, Thierry, 28410 Boutigny-Prouais (FR); LABREVOIS, Philippe, 27810 Marcilly sur eure (FR)

(57) **Abrégé**

L'invention concerne un ensemble comportant une vitre (22) pour fermer un habitacle de véhicule automobile et au moins une première source (50) lumineuse portée par un premier support (54) associé, la vitre (22) étant délimitée transversalement dans le sens de l'épaisseur par une première face (24) libre et par une deuxième face (26) libre, chaque première source (50) lumineuse étant décalée transversalement par rapport à la vitre (22) et émettant des rayons lumineux directement vers la face (24) libre en vis-à-vis, caractérisé en ce que le support (54) est solidaire d'une baguette (58) de fixation comportant une gorge (60) délimitée transversalement par deux ailes (62, 64) verticales, la baguette (58) de fixation étant fixée par encastrement d'un bord (42) de la vitre (22) dans la gorge (60).

L'invention concerne aussi une portière équipée d'un tel ensemble.

## Description

### DOMAINE TECHNIQUE DE L'INVENTION

L'invention concerne un ensemble comportant une vitre pour fermer un habitacle de véhicule automobile et au moins une première source lumineuse portée par un premier support associé, chaque première source lumineuse étant décalée transversalement par rapport à la vitre et émettant des rayons lumineux directement vers une première face libre de la vitre.

### ARRIERE PLAN TECHNIQUE DE L'INVENTION

Les constructeurs automobiles ont déjà proposé d'associer au moins une vitre pour fermer un habitacle avec une source lumineuse pour permettre de produire une lumière semblant émaner directement de la vitre. Cet effet peut être réalisé en dissimulant la source lumineuse dans la carrosserie du véhicule, en bordure de la vitre. Les rayons lumineux pénètrent dans la vitre et se propagent à l'intérieur de la vitre par réflexions successives entre les deux faces principales, les rayons lumineux sortant de la vitre progressivement pour donner une impression de luminescence.

Il est possible d'associer un tel dispositif avec une vitre comportant des motifs de diffusion de la lumière. Lorsque la source lumineuse est éteinte, les motifs de diffusion sont peu perceptibles à l'oeil nu. En revanche, lorsque la source lumineuse est allumée, les rayons lumineux qui atteignent le motif de diffusion sont diffusés, donnant ainsi la sensation que le motif de diffusion est lumineux.

On a déjà proposé d'agencer des sources lumineuses en vis-à-vis d'un chant de la vitre pour éclairer les motifs de diffusion. Or, on a constaté qu'un tel agencement n'est pas adaptable à toutes les géométries de vitres, notamment les vitres latérales coulissantes qui équipent les portières du véhicule. En outre la composition des vitres d'habitacle de véhicule automobile, réalisées en verre trempé ou en verre feuilleté ou en verre organique, tel que du polyméthacrylate de méthyle (PMMA) ou du polycarbonate (PC), ne permet pas une propagation suffisante de la lumière pour permettre d'éclairer correctement des motifs lumineux.

Il a déjà été proposé de faire entrer la lumière par la face extérieure de la vitre au lieu de la face de chant. A cet effet, la source lumineuse est agencée dans un joint extérieur de la portière. La source lumineuse est formée par un guide de lumière qui est éclairé par une source lumineuse indirecte.

Cependant, cette solution est onéreuse car elle impose de réaliser un joint spécifique pour ce genre d'application.

En outre, l'utilisation d'un guide de lumière éclaire simultanément toute la longueur de la vitre, sans possibilité d'éclairer indépendamment différentes zones de la vitre.

### BREF RESUME DE L'INVENTION

L'invention propose un ensemble comportant une vitre pour fermer un habitacle de véhicule automobile et au moins une première source lumineuse portée par un premier support associé, la vitre étant délimitée transversalement dans le sens de l'épaisseur par une première face libre et par une deuxième face libre, chaque première source lumineuse étant décalée transversalement par rapport à la vitre et émettant des rayons lumineux directement vers la face libre en vis-à-vis, caractérisé en ce que le support est solidaire d'une baguette de fixation comportant une gorge délimitée transversalement par deux ailes verticales, la baguette de fixation étant fixée par encastrement d'un bord de la vitre dans la gorge.

Selon d'autres caractéristiques de l'ensemble réalisé selon les enseignements de l'invention :
- la baguette de fixation est fixée de manière démontable sur la vitre par serrage élastique des ailes contre les faces libres de la vitre ;
- la baguette de fixation est immobilisée dans le plan de la vitre par emboîtement transversal d'au moins un pion solidaire d'au moins une aile dans un orifice de fixation associé de la vitre ;
- le pion est réalisé venu de matière avec une aile de la baguette de fixation ;
- la baguette de fixation est réalisée en un matériau plastique, tel que du polyamide ou du polypropylène ;
- la vitre comporte une langue qui s'étend depuis le milieu dudit bord, un fond de la gorge de la baguette de fixation présentant une fente de passage de la langue ;
- le premier support est commun à un premier groupe de premières sources lumineuses qui sont agencées longitudinalement en ligne sur ledit premier support ;
- l'ensemble comporte au moins une deuxième source lumineuse portée par un deuxième support associé, chaque deuxième source lumineuse étant décalée transversalement par rapport à la vitre du côté opposé à la première source lumineuse et émettant un faisceau de rayons lumineux directement vers l'autre face libre, le deuxième support associé étant solidaire de la baguette de fixation ;
- le deuxième support est commun à un deuxième groupe de deuxièmes sources lumineuses qui sont agencées longitudinalement en ligne sur ledit deuxième support ;
- au moins l'un des supports est réalisé en une seule pièce avec la baguette de fixation ;
- au moins l'un des supports se présente sous la forme d'une plateforme de réception qui s'étend transversalement depuis une aile associée de la baguette ;
- chaque source lumineuse est formée par une source lumineuse ponctuelle, telle qu'une diode électroluminescente ;
- chaque groupe de sources lumineuses est formé par une bande de diodes électroluminescentes ;
- la vitre comporte une zone marquée qui est munie de motifs de diffusion de la lumière, les sources lumineuses étant orientées en direction de la zone marquée pour éclairer au moins une partie des motifs de diffusion ;

L'invention concerne aussi une portière de véhicule automobile, caractérisée en ce qu'elle est équipée d'un ensemble réalisé selon les enseignements de l'invention, la vitre étant montée coulissante verticalement dans la portière entre une position extrême d'ouverture dans laquelle elle est escamotée dans un corps creux de la portière et une position extrême de fermeture.

Selon une autre caractéristique de la portière, en position extrême de fermeture de la vitre, la zone marquée est située à l'extérieure du corps creux de la portière, tandis que les sources lumineuses et leur support associé sont cachés à l'intérieur du corps creux.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue du côté intérieur qui représente une partie supérieure d'une portière équipée d'une fenêtre fermée par une vitre réalisée selon les enseignements de l'invention ;
- la figure 2 est une vue similaire à celle de la figure 1 dans laquelle un panneau de carrosserie de la portière a été enlevé ;
- la figure 3 est une vue en coupe transversale verticale selon le plan de coupe 3-3 de la figure 1 qui représente la vitre équipée d'une baguette de fixation portant deux supports de sources lumineuses ;
- la figure 4 est une vue en coupe transversale verticale selon le plan de coupe 4-4 de la figure 1 qui représente la vitre équipée d'une baguette de fixation portant deux supports de sources lumineuses, le plan de coupe étant effectué au niveau d'un pion de fixation de la baguette ;
- la figure 5 est une vue schématique en coupe transversale verticale qui explique le fonctionnement de l'ensemble comportant la vitre et les sources lumineuses équipant la portière de la figure 1 ;
- la figure 6 est une vue du côté intérieur qui représente la vitre équipée de la baguette de fixation, les pions non visibles étant représentés en traits interrompus ;
- la figure 7 est une vue en perspective qui représente la baguette de fixation équipant la vitre de la figure 1 vue de dessus ;
- la figure 8 est une vue en perspective qui représente la baguette de fixation équipant la vitre de la figure 1 vue de dessous.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale, dirigée d'arrière en avant, verticale, dirigée de bas en haut, et transversale, dirigée de l'extérieur vers l'intérieur de l'habitacle, qui sont indiquées par le trièdre "L,V,T" des figures. L'orientation verticale est indépendante de la direction de la gravité terrestre.

Dans la suite de la description, on utilisera le terme intérieur, respectivement extérieur, pour désigner un élément tourné vers l'intérieur de l'habitacle, respectivement vers l'extérieur de l'habitacle.

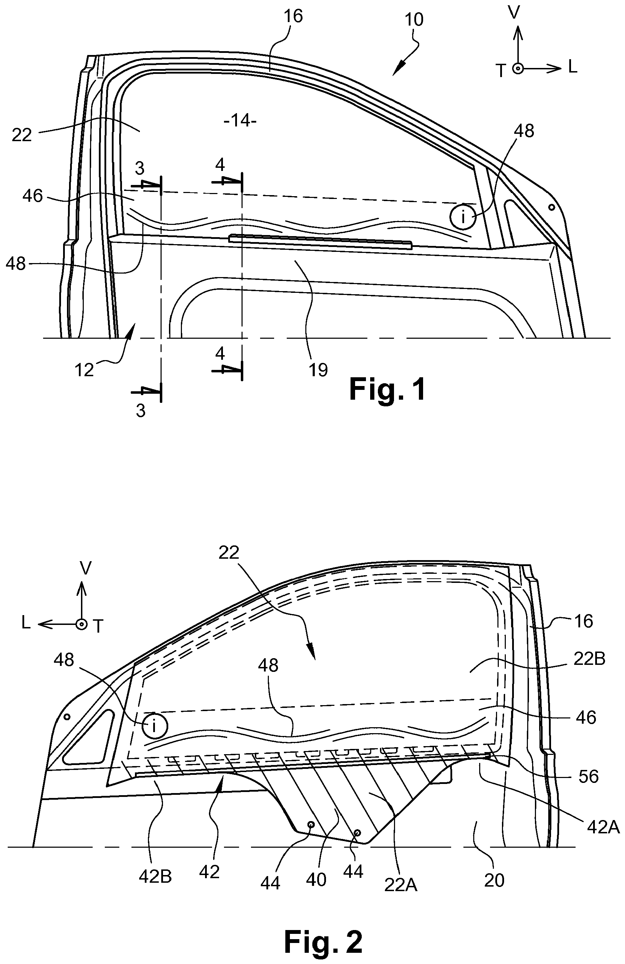

On a représenté à la figure 1 une portière 10 de véhicule automobile qui est destinée à fermer un habitacle (non représenté) du véhicule automobile. La portière 10 comporte un corps creux 12 inférieur et une fenêtre 14 qui est délimitée par un cadre 16 qui s'étend verticalement vers le haut depuis le corps creux 12.

Comme cela est représenté aux figures 2, 3 et 4, l'espace 17 interne du corps creux 12 est délimité transversalement vers l'extérieur de l'habitacle par un panneau 18 de carrosserie globalement vertical longitudinal et vers l'intérieur de l'habitacle par un caisson 20 de garniture globalement vertical longitudinal. Le caisson 20 de garniture est ici réalisé en une pièce avec le cadre 16 de fenêtre. Le caisson 20 de garniture est ici habillé d'un panneau 19 intérieur de garniture.

Le corps creux 12 est ouvert vers le haut par l'intermédiaire d'une fente 21 longitudinale. La fente 21 débouche verticalement dans le plan de la fenêtre 14. La fente 21 est délimitée transversalement entre un bord supérieur du panneau 18 de carrosserie et un bord supérieur du caisson 20 de garniture.

La fenêtre 14 est destinée à être fermée par une vitre 22 qui s'étend globalement dans un plan vertical longitudinal. Bien entendu, la vitre 22 peut présenter une forme légèrement galbée. La vitre 22 est délimitée transversalement dans le sens de l'épaisseur par une première face 24 libre, formant ici la face 24 intérieure de la vitre 22, et par une deuxième face 26 libre, formant ici la face 26 extérieure de la vitre 22.

Il s'agit ici d'une vitre 22 réalisée en verre trempé ou en verre feuilleté ou en verre organique, tel que du polyméthacrylate de méthyle (PMMA) ou du polycarbonate (PC). La vitre 22 est monobloc.

La vitre 22 est montée coulissante verticalement dans la fente 21 de la portière 10 entre une position extrême de fermeture dans laquelle elle ferme totalement la fenêtre 14, comme cela est représenté aux figures 1 et 2, et une position extrême d'ouverture (non représentée) dans laquelle la vitre 22 est rétractée vers le bas au moins partiellement à l'intérieur du corps creux 12.

Pour permettre d'éviter que de l'humidité et/ou des particules polluantes n'entrent à l'intérieur du corps creux 12, la fente 21 est fermée par un joint 28 d'étanchéité intérieur et par un joint 30 d'étanchéité extérieur.

Le joint 28 intérieur comporte un corps 32 longitudinal qui est emboîté avec le bord supérieur du caisson 20 de garniture. Une lèvre 34 souple s'étend transversalement depuis le corps 32 de joint jusqu'à un bord extérieur libre qui est en appui sur la face 24 intérieure de la vitre 22 pour réaliser la fonction d'étanchéité. Le corps 32 comporte aussi une rainure longitudinale d'emboîtement d'un bord du panneau 19 de garniture.

Le joint 30 extérieur comporte un corps 36 longitudinal qui est emboîté avec le bord supérieur du panneau 18 de carrosserie. Une lèvre 38 souple s'étend transversalement depuis le corps 36 de joint jusqu'à un bord intérieur libre qui est en appui sur la face 26 extérieure de la vitre 22 pour réaliser la fonction d'étanchéité.

Chaque joint 28, 30 intérieur et extérieur comporte ici une unique lèvre 34, 38 souple. Les deux lèvres 34, 38 appuient sur la vitre 22 transversalement en vis-à-vis l'une de l'autre pour équilibrer les efforts appliqués à la vitre 22.

Comme cela est représenté à la figure 2, en position extrême de fermeture de la vitre 22, une portion inférieure de la vitre 22, dite portion 22A cachée, est cachée à l'intérieur du corps creux 12, tandis qu'une portion supérieure de la vitre 22, dite portion 22B de fermeture, est visible dans le cadre 16 de la fenêtre 14. La portion 22A cachée a été indiquée par des hachures aux figures 2 à 6. La portion 22A cachée est ici définie comme étant située au-dessous des lèvres 34, 38 des joints 28, 30 tandis que la portion 22B de fermeture s'étend au-dessus des lèvres 34, 38 des joints 28, 30 en position extrême de fermeture.

La portion 22A cachée demeure à l'intérieur du corps creux 12 quelle que soit la position de la vitre 22 entre ses deux positions extrêmes. La portion 22A cachée comporte ici une langue 40 qui s'étend verticalement vers le bas depuis le milieu du bord 42 inférieur de la vitre 22. Ainsi le bord 42 inférieur de la vitre 22 présente deux tronçons 42A, 42B d'extrémité qui sont agencées globalement parallèlement aux joints 28, 30, verticalement à proximité desdits joints 28, 30, la langue 40 s'étendant verticalement vers le bas au-dessous du niveau des deux tronçons 42A, 42B d'extrémité. La langue 40 est munie de trous 44 qui permettent de lier la vitre 22 avec un dispositif (non représenté) de commande en coulissement qui est dissimulé dans le corps creux 12.

En variante non représentée de l'invention, le bord inférieur de la vitre peut comporter plusieurs langues similaires à la langue 40, par exemple deux langues. Chacune de ces langues peut être agencée à une extrémité du bord inférieur ou dans une portion centrale du bord inférieur.

Il est aussi prévu que la vitre 22 comporte une zone 46 marquée qui est munie de motifs 48 de diffusion de la lumière. La zone 46 marquée est ici agencée sur une bande d'extrémité inférieure de la portion 22B de fermeture, sur toute la longueur de la vitre 22. La zone 46 marquée est ainsi mitoyenne de la portion 22A cachée de la vitre 22. Dans l'exemple représenté aux figures, le reste de la portion 22B de fermeture ne comporte pas de motifs 48 de diffusion.

Les motifs 48 de diffusion ont par exemple une fonction esthétique et/ou une fonction de communication d'information.

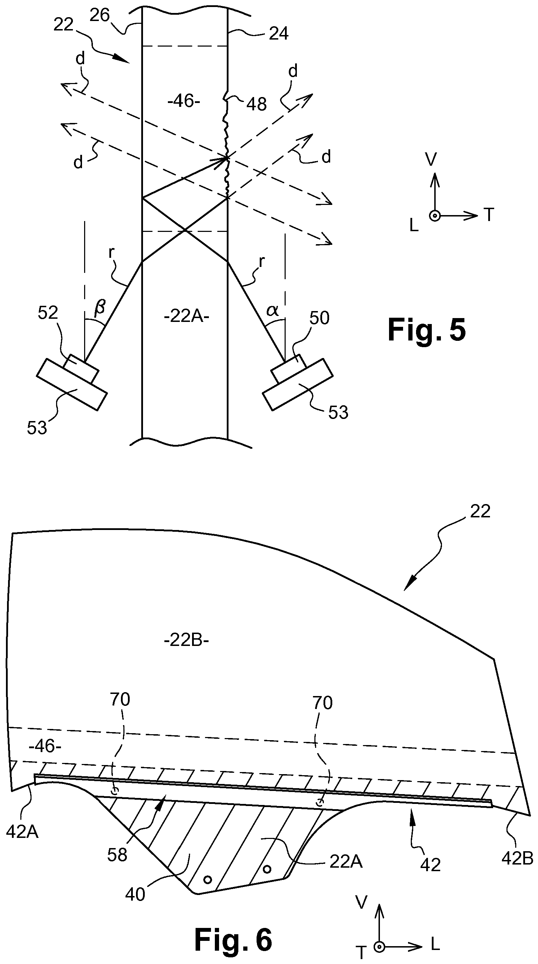

Les motifs 48 de diffusion sont par exemples formés par des surfaces dépolies. Les motifs 48 de diffusion peuvent être réalisés soit par gravure en surface de la vitre 22, par exemple au moyen d'un laser ou par sablage, soit par gravure au coeur, c'est-à-dire dans l'épaisseur, de la vitre 22, par exemple au moyen d'un laser. Dans l'exemple représenté à la figure 5, les motifs 48 de diffusion sont réalisés par gravure en surface de la face 24 intérieure de la vitre 22.

Comme cela est représenté à la figure 5, la portière 10 est en outre équipée d'au moins une première source 50 lumineuse.

Dans l'exemple représenté à la figure 5, la portière 10 comporte aussi au moins une deuxième source 52 lumineuse.

Il s'agit ici de sources 50, 52 lumineuses ponctuelles, formées par exemple par des diodes électroluminescentes. Une telle diode électroluminescente est généralement fixée sur un substrat 53, tel qu'une carte souple ou rigide à circuit imprimé. Les sources 50, 52 sont alimentées en électricité par une batterie (non représentée) du véhicule automobile.

Chaque première source 50 lumineuse forme une source 50 lumineuse intérieure qui est décalée transversalement par rapport à la vitre 22 vers l'intérieur de l'habitacle. La première source 50 lumineuse est orientée de manière à émettre un faisceau de rayons lumineux selon un axe principal d'émission directement vers la face 24 intérieure de la vitre 22. Plus particulièrement, le faisceau de rayons lumineux est orienté en direction de la zone 46 marquée pour éclairer au moins une partie des motifs 48 de diffusion.

De même, chaque deuxième source 52 lumineuse forme une source 52 lumineuse extérieure qui est décalée transversalement par rapport à la vitre 22 vers l'extérieur. La deuxième source 52 lumineuse est orientée de manière à émettre un faisceau de rayons lumineux directement vers la face 26 extérieure de la vitre 22. Plus particulièrement, le faisceau de rayons lumineux est orienté en direction de la zone 46 marquée pour éclairer au moins une partie des motifs 48 de diffusion.

Comme cela est représenté schématiquement par les flèches "r" de la figure 5, une partie les rayons lumineux émis par la première source 50 lumineuse pénètrent dans l'épaisseur de la vitre 22 par la face 24 intérieure de la portion 22A cachée. Au moins une partie de ces rayons lumineux "r" est réfléchie par la face 26 extérieure en direction des motifs 48 de diffusion de la face 24 intérieure. Les rayons lumineux "d" atteignant les motifs 48 de diffusion réalisés sur la face 24 intérieure de la vitre 22 sont diffusés dans toutes les directions, c'est-à-dire vers l'intérieur de l'habitacle, d'une part, et vers l'intérieur de la vitre 22 avant de ressortir par la face 26 extérieure vers l'extérieur de l'habitacle, d'autre part.

Les rayons lumineux émis par la deuxième source 52 lumineuse pénètrent dans la vitre 22 en passant à travers la face 26 extérieure. Les rayons lumineux "d" atteignant les motifs 48 de diffusion réalisés sur la face 24 intérieure de la vitre 22 sont diffusés dans toutes les directions, c'est-à-dire vers l'intérieur de l'habitacle, d'une part, et vers l'intérieur de la vitre 22 avant de ressortir par la face 26 extérieure vers l'extérieur de l'habitacle, d'autre part.

De cette manière, lorsque les sources 50, 52 lumineuses sont allumées, le motif 48 de diffusion apparaît lumineux pour un observateur situé à l'intérieur ou à l'extérieur de l'habitacle.

La zone 46 marquée s'étend sur toute la longueur de la vitre 22. Pour permettre de l'éclairer entièrement, la portière 10 comporte avantageusement un groupe de plusieurs premières sources 50 lumineuses agencées du côté intérieur de la vitre 22 et/ou un groupe de plusieurs deuxièmes sources 52 lumineuses agencées du côté extérieur de la vitre 22. Chaque groupe de sources 50, 52 lumineuses est par exemple formé par une bande de diodes électroluminescentes. Toutes les diodes électroluminescentes d'un groupe sont ainsi alignées longitudinalement. Chaque source 50, 52 lumineuse est ainsi susceptible d'éclairer une portion de la zone 46 marquée.

Avantageusement, chaque source 50, 52 lumineuse ponctuelle est susceptible d'être commandée individuellement entre un état éteint et un état allumé. De cette manière, il est possible d'éclairer seulement une partie de la zone 46 marquée selon le contexte d'utilisation du véhicule et/ou selon les désirs du conducteur.

Chaque source 50, 52 lumineuse est ici portée par la vitre 22. Pour éviter qu'une source 50, 52 lumineuse n'éclaire directement un observateur, chaque source 50, 52 lumineuse est agencée au niveau de la portion 22A cachée de la vitre 22 de manière à être constamment cachée à l'intérieur du corps creux 12, au-dessous des lèvres 34, 38 des joints 28, 30. Ainsi, un observateur perçoit la lumière indirectement, après qu'elle ait été diffusée, réfléchie ou réfractée par la vitre 22. Les sources 50, 52 lumineuses sont cependant agencées au plus proche de la zone 46 marquée de la vitre 22 pour permettre un bon éclairage des motifs 48 de diffusion.

Chaque première source 50 lumineuse est portée par un premier support 54 associé. De même chaque deuxième source 52 lumineuse est portée par un deuxième support 56 associé.

Les sources lumineuses 50, 52 sont par exemple fixées par collage de leur substrat sur le support 54, 56 associé.

Chaque support 54, 56 est solidaire d'une baguette 58 de fixation sur la vitre 22. 10. Dans le cadre de l'invention, le terme "solidaire" signifie que le support est porté directement et de manière fixe par la baguette 58 de fixation. Au moins l'un des supports 54, 56, ici les deux supports 54, 56, est réalisé en une seule pièce avec la baguette 58 de fixation.

La baguette 58 de fixation est réalisée en un matériau dur et déformable élastiquement, par exemple en un matériau plastique, tel que du polyamide ou du polypropylène.

La baguette 58 de fixation présente ici un axe principal rectiligne longitudinal. Elle s'étend globalement sur toute la longueur de la vitre 22.

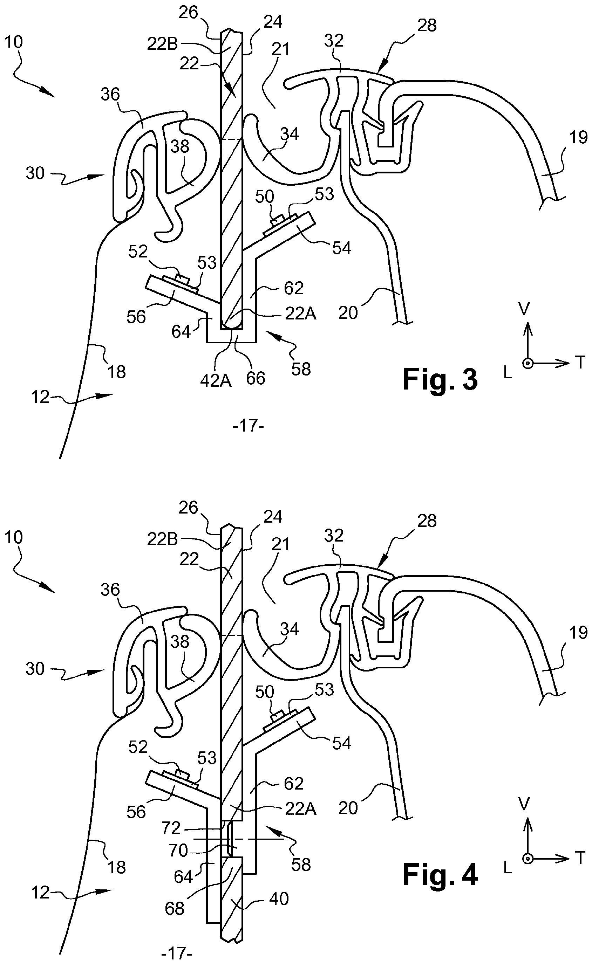

Comme cela est représenté aux figures 3, 4, 7 et 8, la baguette 58 de fixation comporte une gorge 60 centrale longitudinale qui est délimitée transversalement par une aile 62 verticale intérieure et par une aile 64 verticale extérieure. La gorge 60 est délimitée verticalement vers le bas par un fond 66 et elle est ouverte verticalement vers le haut.

Le support 54 intérieur se présente sous la forme d'une plateforme de réception qui s'étend transversalement vers l'intérieur depuis l'aile 62 intérieure de la baguette 58. Le support 54 s'étend plus particulièrement depuis un bord longitudinal d'extrémité supérieure de l'aile 62. Le support 54 est ici incliné vers la face 24, 26 associée de la vitre 22 de manière à permettre une orientation optimale du faisceau lumineux émis par la source 50, 52 lumineuse vers la face 24, 26 associée de la vitre pour obtenir le fonctionnement décrit précédemment.

Dans le cadre de l'exemple représenté aux figures, la vitre 22 est équipée d'un premier groupe de premières sources 50 lumineuses, ici sous forme d'une bande de diodes électroluminescentes. Le support 54 intérieur associé est commun à tout le premier groupe de premières 50 sources lumineuses qui sont agencées en ligne sur ledit support 54 intérieur. Le support 54 intérieur présente alors la forme d'une barre longitudinale continue qui s'étend sur toute la longueur de la baguette 58 de fixation.

De même, le support 56 extérieur se présente sous la forme d'une plateforme de réception qui s'étend transversalement vers l'extérieur depuis l'aile 64 extérieure de la baguette 58. Le support 56 s'étend plus particulièrement depuis un bord longitudinal d'extrémité supérieure de l'aile 64.

Dans le cadre de l'exemple représenté aux figures, la vitre 22 est équipée d'un deuxième groupe de deuxièmes sources 52 lumineuses, ici sous forme d'une bande de diodes électroluminescentes. Le support 56 extérieur associé est commun à tout le deuxième groupe de deuxièmes 50 sources lumineuses qui sont agencées en ligne sur ledit support 56 extérieur. Le support 56 extérieur présente alors la forme d'une barre longitudinale continue qui s'étend sur toute la longueur de la baguette 58 de fixation.

Chaque support 54, 56 longitudinal est ici agencé parallèlement à la ligne de démarcation entre la portion 22A cachée et la portion 22B de fermeture de la vitre 22. Chaque support 54, 56 est par exemple tangent aux tronçons 42A, 42B d'extrémité du bord inférieur de la vitre 22.

Les supports 54, 56 sont ici agencés à deux hauteurs différentes. Ceci est dû à la différence de hauteur entre les corps 32 et 36 de chacun des joints 28, 30. L'inclinaison de chaque support 54, 56 est déterminée de manière à ce que les axes principaux d'émission des faisceaux lumineux de chaque source lumineuse 50, 52 se croisent dans l'épaisseur de la vitre 22. Ainsi, le premier support 54 est incliné d'un premier angle "a" par rapport au plan vertical de la vitre 22, tandis que le deuxième support 56 est incliné d'un deuxième angle "β" par rapport au plan vertical de la vitre 22.

La baguette 58 de fixation est fixée à la vitre 22 par encastrement du bord 42 inférieur de la vitre 22 dans la gorge 60. Plus particulièrement, la baguette 58 de fixation est fixée de manière démontable sur la vitre 22 par serrage élastique transversal des ailes 62, 64 contre les faces 24, 26 libres de la vitres 22. A cet égard, les bords supérieurs des ailes 62, 64 au repos sont écartés d'une distance transversale inférieure à l'épaisseur de la vitre 22.

Plus particulièrement, la baguette 58 de fixation s'étend longitudinalement au niveau des tronçons 42A, 42B d'extrémité du bord inférieur de la vitre 22. Ainsi, les tronçons 42A, 42B d'extrémité du bord inférieur de la vitre 22 sont reçus en butée contre le fond 66 de la gorge 60.

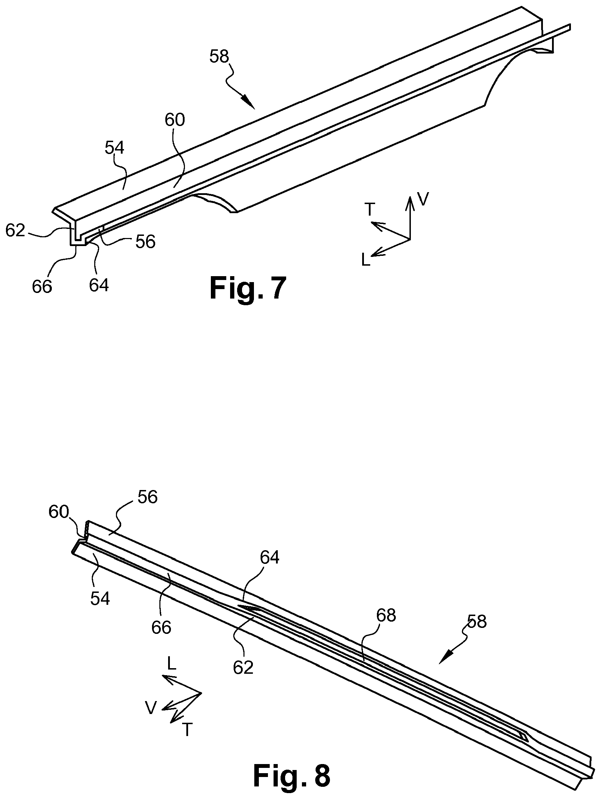

Le fond 66 de la gorge 60 présente en outre une fente 68 longitudinale de passage de la langue 40 de la vitre 22, comme cela est visible aux figures 4 et 8.

Pour immobiliser la baguette de fixation verticalement en position encastrée, au moins un pion 70 solidaire d'au moins une aile 62 est emboîté transversalement dans un orifice 72 correspondant de fixation de la vitre 22. Dans l'exemple représenté à la figure 6, l'ensemble comporte deux pions 70 de fixation qui coopèrent avec des orifices 72 réalisés en partie haute de la langue 40 de la vitre 22, à proximité des tronçons 42A, 42B d'extrémité du bord inférieur de la vitre 22.

Dans le mode de réalisation représenté à la figure 4, chaque pion 70 est réalisé venu de matière avec une aile, ici l'aile 62 intérieure, de la baguette 58 de fixation. Ainsi chaque pion 70 s'étend en travers de la gorge 60. L'emboîtement est réalisé par déformation élastique de l'aile 62 intérieure lors de l'encastrement de la vitre 22 dans la baguette 58 de fixation.

Cet agencement permet avantageusement le démontage de la baguette 58 de fixation en écartant les ailes 62, 64 pour pouvoir l'adapter à une nouvelle vitre 22 lors d'un remplacement de la vitre 22, par exemple en cas d'endommagement de la vitre 22 ou en cas de changement des motifs 48 de diffusion.

Il est ainsi possible de conserver la baguette 58 de fixation et les sources 50, 52 lumineuses associées et de les monter sur la vitre 22 de remplacement. En outre, il n'est pas nécessaire de démonter les sources lumineuses 50, 52 de la baguette 58 de fixation lors d'un remplacement de la vitre 22.

De plus, la baguette 58 de fixation est susceptible d'être montée sur des vitres 22 standards, moyennant un simple perçage des orifices 72 de fixation.

Lors de la réalisation de la portière 10, la vitre 22 est tout d'abord réalisée, par exemple en verre feuilleté ou en verre trempé ou en verre organique. Les motifs 48 de diffusions sont généralement gravés avant le montage de la baguette 58 de fixation.

Puis la baguette 58 de fixation est ensuite encastrée avec le bord 42 inférieur de la vitre 22. La vitre 22 est ensuite montée dans le corps creux 12 de la portière 10.

Les sources 50, 52 lumineuses sont généralement préalablement montées sur les supports 54, 56 associés.

L'invention est applicable a été décrite en application à des vitres latérales coulissantes. On comprendra qu'elle est aussi applicable à des vitres fixes d'habitacle de véhicule automobile, telles que des vitres latérales, des parebrises, des vitres de custodes ou des vitres de toit panoramique.

## Revendications

1. Ensemble comportant une vitre (22) pour fermer un habitacle de véhicule automobile et au moins une première source (50) lumineuse portée par un premier support (54) associé, la vitre (22) étant délimitée transversalement dans le sens de l'épaisseur par une première face (24) libre et par une deuxième face (26) libre, chaque première source (50) lumineuse étant décalée transversalement par rapport à la vitre (22) et émettant des rayons lumineux directement vers la face (24) libre en vis-à-vis,
**caractérisé en ce que** le support (54) est solidaire d'une baguette (58) de fixation comportant une gorge (60) délimitée transversalement par deux ailes (62, 64) verticales, la baguette (58) de fixation étant fixée par encastrement d'un bord (42) de la vitre (22) dans la gorge (60).

2. Ensemble selon la revendication précédente, **caractérisé en ce que** la baguette (58) de fixation est fixée de manière démontable sur la vitre (22) par serrage élastique des ailes (62, 64) contre les faces (24, 26) libres de la vitre (22).

3. Ensemble selon l'une quelconque des revendications précédentes, **caractérisé en ce que** la baguette (58) de fixation est immobilisée dans le plan de la vitre (22) par emboîtement transversal d'au moins un pion (70) solidaire d'au moins une aile (62) dans un orifice (72) de fixation associé de la vitre (22).

4. Ensemble selon la revendication précédente, **caractérisé en ce que** le pion (70) est réalisé venu de matière avec une aile (62) de la baguette (58) de fixation.

5. Ensemble selon l'une quelconque des revendications précédentes, **caractérisé en ce que** la baguette (58) de fixation est réalisée en un matériau plastique, tel que du polyamide ou du polypropylène (polymère).

6. Ensemble selon l'une quelconque des revendications précédentes, **caractérisé en ce que** la vitre (22) comporte une langue (40) qui s'étend depuis le milieu dudit bord (42), un fond (66) de la gorge (60) de la baguette (58) de fixation présentant une fente (68) de passage de la langue (40).

7. Ensemble selon la revendication précédente, **caractérisé en ce que** le premier support (54) est commun à un premier groupe de premières sources (50) lumineuses qui sont agencées longitudinalement en ligne sur ledit premier support (54).

8. Ensemble selon l'une quelconque des revendications précédentes, **caractérisé en ce qu'**il comporte au moins une deuxième source (52) lumineuse portée par un deuxième support (56) associé, chaque deuxième source (52) lumineuse étant décalée transversalement par rapport à la vitre (22) du côté opposé à la première source (50) lumineuse et émettant un faisceau de rayons lumineux directement vers l'autre face (26) libre, le deuxième support (56) associé étant solidaire de la baguette (58) de fixation.

9. Ensemble selon la revendication précédente, **caractérisé en ce que** le deuxième support (56) est commun à un deuxième groupe de deuxièmes sources (52) lumineuses qui sont agencées longitudinalement en ligne sur ledit deuxième support (56).

10. Ensemble selon l'une quelconque des revendications précédentes, **caractérisé en ce qu'**au moins l'un des supports (54, 56) est réalisé en une seule pièce avec la baguette (58) de fixation.

11. Ensemble selon l'une quelconque des revendications précédentes, **caractérisé en ce qu'**au moins l'un des supports (54, 56) se présente sous la forme d'une plateforme de réception qui s'étend transversalement depuis une aile (60, 62) associée de la baguette (58).

12. Ensemble selon l'une quelconque des revendications précédentes, **caractérisé en ce que** chaque source (50, 52) lumineuse est formée par une source lumineuse ponctuelle, telle qu'une diode électroluminescente.

13. Ensemble selon la revendication précédente prise en combinaison avec la revendication 7 et/ou 9, **caractérisé en ce que** chaque groupe de sources (50, 52) lumineuses est formé par une bande de diodes électroluminescentes.

14. Ensemble selon l'une quelconque des revendications précédentes, **caractérisé en ce que** la vitre (22) comporte une zone (46) marquée qui est munie de motifs (48) de diffusion de la lumière, les sources (50, 52) lumineuses étant orientées en direction de la zone (46) marquée pour éclairer au moins une partie des motifs (48) de diffusion.

15. Portière (10) de véhicule automobile, **caractérisée en ce qu'**elle est équipée d'un ensemble réalisé selon l'une quelconque des revendications précédentes, la vitre (22) étant montée coulissante verticalement dans la portière (10) entre une position extrême d'ouverture dans laquelle elle est escamotée dans un corps creux (12) de la portière (10) et une position extrême de fermeture.

16. Portière (10) selon la revendication précédente prise en combinaison avec la revendication 11, **caractérisée en ce qu'**en position extrême de fermeture de la vitre (22), la zone (46) marquée est située à l'extérieure du corps creux (12) de la portière (10), tandis que les sources (50, 52) lumineuses et leur support (54, 56) associé sont cachés à l'intérieur du corps creux (12).
